**Europäisches Patentamt**

**European Patent Office**

**Office européen des brevets**

(19)

(11) **EP 1 220 066 A2**

(12) **EUROPÄISCHE PATENTANMELDUNG**

| | |
|---|---|
| (43) Veröffentlichungstag:<br>**03.07.2002 Patentblatt 2002/27** | (51) Int Cl.⁷: **G05B 19/042** |

(21) Anmeldenummer: **01127266.3**

(22) Anmeldetag: **16.11.2001**

| | |
|---|---|
| (84) Benannte Vertragsstaaten:<br>**AT BE CH CY DE DK ES FI FR GB GR IE IT LI LU**<br>**MC NL PT SE TR**<br>Benannte Erstreckungsstaaten:<br>**AL LT LV MK RO SI** | (72) Erfinder:<br>• **Götz, Konrad**<br>  **93309 Kelheim (DE)**<br>• **Berthold, Arndt**<br>  **04105 Leipzig (DE)**<br>• **Böldt, Frank**<br>  **14656 Brieselang (DE)**<br>• **Krüger, Sven-Stefan**<br>  **14979 Grossbeeren (DE)** |
| (30) Priorität: **29.12.2000 DE 10065675** | |
| (71) Anmelder: **BSH Bosch und Siemens Hausgeräte**<br>**GmbH**<br>**81669 München (DE)** | |

(54) **Verfahren zur Kommunikation und/oder zum Datenaustausch zwischen einem elektrischen Gerät und einer Datenbank**

(57) Die Erfindung betrifft ein Verfahren zur Kommunikation und/oder zum Datenaustausch zwischen einem elektrischen Gerät und einer Datenbank, bei dem in einem einer zentralen Rechen- und Steuereinheit des elektrischen Geräts zugeordneten internen Speicher eine Zugriffsadresse abgespeichert ist, unter der gerätespezifische Informationen zugänglich sind. Bei dem Verfahren ist vorgesehen, dass das elektrische Gerät zumindest zeitweise mit einer Datenbank gekoppelt wird, wobei die Zugriffsadresse eine Adresse der Datenbank ist.

**Beschreibung**

Die Erfindung betrifft ein Verfahren zur Kommunikation und/oder zum Datenaustausch zwischen einem elektrischen Gerät und einer Datenbank gemäß den Merkmalen der unabhängigen Ansprüche.

Elektrische Geräte, insbesondere elektrische Haushaltsgeräte gemäß dem bekannten Stand der Technik weisen üblicherweise eine elektronische (Mikroprozessor-)Steuerung auf, in der Signale von Sensoren ausgewertet und von der in Abhängigkeit von den empfangenen Sensorsignalen sowie von Benutzereingaben bestimmte Aktionen angesteuert bzw. ausgelöst werden. Eine zentrale Rechen- und Steuereinheit der elektronischen Steuerung steht üblicherweise mit einem internen Speicher in Verbindung, auf dem verschiedene Steuerprogramme abgelegt sein können. Auf einem derartigen internen Speicher können ggf. neuere Programmversionen zur Steuerung der zentralen Rechen- und Steuereinheit abgelegt werden, die mittels einer Datenverbindung, ggf. über ein Netzwerk, von einer Datenbank übermittelt werden können. Auch kann ein derartiger interner Speicher zur Fehlerspeicherung genutzt werden; d.h. auftretende Funktionsfehler werden dort abgespeichert, damit sie später als Fehlerdaten und -parameter an einen Servicerechner übermittelt werden können. Diese Übermittlung kann entweder auf drahtgebundenem Weg, bspw. durch Ankoppelung eines portablen Servicerechners an das elektrische Haushaltsgerät, oder auf drahtlosem Weg, bspw. durch Funkübertragung der Fehlerparameter an einen nahen oder weiter entfernten Funkempfänger, erfolgen. Typischerweise ist die zentrale Rechen- und Steuereinheit eines elektrischen Geräts mit einer nach außen geführten Schnittstelle versehen, über die ein Datenaustausch mit einem externen Rechner erfolgen kann. Über eine solche Schnittstelle kann bspw. eine drahtgebundene oder auch eine drahtlose Kommunikation erfolgen, bspw. in Form eines Austausches von Lichtsignalen im Infrarotbereich. Auf diese Weise kann mittels eines externen portablen Rechners, eines sog. Notebooks, über dessen Infrarotschnittstelle (IR-Port) eine Datenkommunikation mit einer entsprechenden IR-Schnittstelle des elektrischen Geräts erfolgen.

Für einen Kundendienst kann ein direkter Zugriff auf interne Gerätedaten vorteilhaft sein, um zu einer schnellen Fehlerdiagnose zu gelangen; eine Diagnose lediglich auf Grundlage von sichtbaren und/ oder von außen erkennbaren Fehlfunktionen ist in der Regel aufgrund der oftmals relativ komplexen Steuerung mit einer Vielzahl von Sensoren und Aktoren schwierig oder gar unmöglich. Um über eine Fehlfunktion entscheiden zu können, ist meist eine Abfrage von internen Gerätedaten notwendig; hierzu müssen bestimmte Speicherzellen ausgelesen werden, bspw. ein Druckwert eines analogen Drucksensors oder dergleichen. Diese Daten sind jedoch im internen Speicher der zentralen Rechen- und Steuereinheit - als solche findet typischerweise ein Mikroprozessor Verwendung - nicht immer in der gleichen Speicheradresse abgelegt. Derartige Daten werden im Speicher üblicherweise so variabel abgelegt, dass insgesamt möglichst wenig Speicherplatz dafür benötigt wird. Die hierfür erforderlichen Algorithmen werden üblicherweise bereits bei der Erstellung der in der Rechen- und Steuereinheit ablaufenden Programme implementiert.

Allerdings wird beim Erstellen des Programms - z.B. beim sog. Compilieren (Übersetzen in Maschinensprache) oder beim sog. "Linken" - eine sogenannte Zuordnungsdatei (Zuordnungsfile, Symbolfile) erzeugt, in der die in dem Programm verwendeten Datenverweise ("Datenbezeichner") sowie die entsprechende Adresse eingetragen sind. Nur mit einer individuellen Zuordnungsdatei, die einer bestimmten Steuerung zugeordnet ist, kann dann auf einen bestimmten Datensatz zugegriffen werden.

Die für einen Kundendienst verfügbaren Serviceunterlagen und -daten sind üblicherweise in elektronischer Form verfügbar. Diese Daten können bspw. auf sog. CD-Roms oder auch in zentraler Form - zugänglich über ein Kommunikationsnetz (Intra- oder Internet) - abgespeichert sein. Ein Kundendienstmitarbeiter muss jedoch bei Bedarf per Hand die zu einem elektrischen Gerät gehörenden Daten und Zeichnungen suchen.

Der vorliegenden Erfindung liegt die Aufgabe zugrunde, ein Verfahren anzugeben, das es einer elektronischen Steuerung eines elektrischen Gerätes gestattet, auf gerätespezifische Daten einer Datenbank zuzugreifen.

Diese Aufgabe wird mit den Merkmalen der unabhängigen Ansprüche gelöst. Demnach ist bei einem erfindungsgemäßen Verfahren zur Kommunikation und/oder zum Datenaustausch zwischen einem elektrischen Gerät und einer Datenbank in einem einer zentralen Rechen- und Steuereinheit des elektrischen Geräts zugeordneten internen Speicher eine Zugriffsadresse abgespeichert, unter der gerätespezifische Informationen zugänglich sind. Das elektrische Gerät kann zumindest zeitweise mit einer Datenbank gekoppelt sein, wobei die Zugriffsadresse im internen Speicher der zentralen Rechen- und Steuereinheit des elektrischen Geräts eine Adresse der Datenbank ist. Vorzugsweise kann das elektrische Gerät mit der Datenbank über ein lokales Rechnernetzwerk oder auch über das Internet kommunizieren. Mit diesem erfindungsgemäßen Verfahren ist es auf einfache Weise möglich, gerätespezifische Daten, bspw. Reparatur- oder Service- oder Kundendienstunterlagen, direkt aus einer Datenbank abzufragen, ohne dass hierzu irgendwelche manuellen Eingaben notwendig wären.

Bei einer Kommunikation über ein lokales oder globales Netzwerk, wie es bspw. das Internet ist, kann es vorteilhaft sein, wenn die gerätespezifischen Informationen in der Datenbank als HTML(HyperText Markup Language) -Dokumente abgespeichert sind, da dieses Hypertext-Format sehr universell ist und zudem nicht auf ein bestimmtes Betriebssystemen eingeschränkt ist. In einer bevorzugten Ausführungsform der Erfindung weist die Zugriffsadresse ein URL-kompatibles Adressformat auf. D.h. die Zugriffsadresse verweist auf einen sogenannten Unique Resource Locator (URL), womit eine Adresse einer Datei im sog. WWW (World Wide Web bzw. Internet) bezeichnet wird. Ein solcher Verweis auf einen bestimmten URL veranlasst die zentrale Rechen- und Steuereinheit, über die Datenverbindung eine bestimmte Adresse im Internet anzuwählen und von dieser die benötigten gerätespezifischen Informationen abzurufen. Die elektrische Koppelung zu der externen Datenbank kann auf einfache Weise über eine serielle Schnittstelle des elektrischen Geräts erfolgen.

Das erfindungsgemäße Verfahren kann bei vielen elektrischen Geräten Anwendung finden, insbesondere jedoch bei ektrischen Haushaltsgeräten, die sich auf diese Weise zudem als Teil eines lokalen Netzwerks, das mit einem größeren Netzwerk und/ oder mit dem Internet gekoppelt ist, einbinden lassen. So lassen sich mit diesem Verfahren Verbindungen zwischen einzelnen Haushaltsgeräten und einem Hausautomatisierungsnetzwerk auf einfache Weise herstellen, da ein Datenaustausch von genormten Datenformaten stattfinden kann.

Weitere Vorteile und bevorzugte Ausführungsformen sind den Unteransprüchen sowie der folgenden Beschreibung eines bevorzugten Ausführungsbeispiels zu entnehmen. Das im folgenden beschriebene Ausführungsbeispiel nimmt auf ein elektrisches Haushaltsgerät Bezug, da hierbei die Vorteile der Erfindung besonders augenfällig gemacht werden können.

Da moderne elektrische Haushaltsgeräte in aller Regel über eine umfangreiche elektronische Ausstattung mit einer Vielzahl von Sensoren und Aktoren sowie über eine Mikroprozessorsteuerung verfügen, kann für eine Fehlerdiagnose meist nicht auf einen Zugriff auf umfangreiche Serviceunterlagen verzichtet werden. Diese Serviceunterlagen, die meist für jedes Haushaltsgerät spezifische Daten enthalten, liegen typischerweise in elektronischer Form vor, so dass eine Zuordnungsvorschrift in der elektronischen Rechner- und Steuereinheit des Haushaltsgeräts, die auf eine bestimmte Datenbankadresse verweist, unter der diese Unterlagen verfügbar sind, einen schnellen und direkten Zugriff auf diese Daten gestattet. Eine Zuordnungshilfe in der Steuerungseinheit des Haushaltsgeräts ermöglicht es somit, aus einer Vielzahl von Daten einen für das einzelne Gerät passenden Datensatz auszusuchen und abzurufen.

Eine in der zentralen Rechen- und Steuereinheit abgelegte URL-kompatible Zuordnungsadresse, die bspw. als eine ASCII-Zeichenkette abgespeichert sein kann, kann eine bestimmte Internet-Adresse bezeichnen und es auf diese Weise ermöglichen, diese Adresse anzuwählen und über diese Adresse Daten auszutauschen, sobald eine elektrische Verbindung zum Internet hergestellt ist. Diese Adresse könnte bspw. folgendermaßen aussehen:

"(Internetadresse des Geräteherstellers) + (Code des speziellen Haushaltsgeräts)

+ (Kundendienstindex)",

was im URL-Format bspw. folgendermaßen aussehen könnte:
http:\\www.gerätehersteller.com/code_gerät0123x/kd05/index.htm

Über eine serielle Schnittstelle des elektrischen Haushaltsgeräts kann dessen zentrale Rechen- und Steuereinheit entweder direkt über einen Internet-Anschluss auf die in der Datenbank abgespeicherten Daten zugreifen. Es kann jedoch auch sinnvoll sein, über die serielle Schnittstelle auf einen lokalen Rechner zuzugreifen, der wiederum eine Internet-Verbindung herstellen kann. Über diese Internet-Verbindung kann dann ein automatischer Zugriff auf die für das jeweilige Gerät aktuellen Bedien- und Kundendiensthinweise erfolgen.

Wenn das elektrische Haushaltsgerät Teil eines Hausautomatisierungsnetzwerkes ist, kann über einen zentralen Internet-Zugriff in regelmäßigen Abständen ein Software-Update für die verschiedensten Geräte sowie für die Netzwerksteuerung erfolgen. In einer Datenbank des Geräteherstellers oder eines damit beauftragten Serviceunternehmens können spezielle Dienste oder Erweiterungsmöglichkeiten für einzelne Haushaltsgeräte angeboten werden. Eine zusätzliche Aufnahme des Fertigungsdatums sowie der Fertigungsnummer eines einzelnen Gerätes in dessen Speicher erlaubt eine Abspeicherung von Kundendienst- und Servicedaten für jedes einzelne Gerät.

In einem solcherart vernetzten Haushalt kann ein Benutzer bei Bedarf automatisch auf eine seinem Haushaltsgerät zugeordnete Internetseite gelenkt werden, wo bspw. Angebote zum Update, Hinweise und andere aktuelle Informationen verfügbar sind. Ebenso möglich ist eine Hinterlegung von Anfragen an den Kundendienst auf dieser Internetseite.

**Patentansprüche**

1. Verfahren zur Kommunikation und/oder zum Datenaustausch zwischen einem elektrischen Gerät und einer Datenbank, bei dem in einem einer zentralen Rechen- und Steuereinheit des elektrischen Geräts zugeordneten internen Speicher eine Zugriffsadresse abgespeichert ist, unter der gerätespezifische Informationen zugänglich sind, bei dem das elektrische Gerät zumindest zeitweise mit einer Datenbank gekoppelt wird, wobei die Zugriffsadresse eine Adresse der Datenbank ist.

**2.** Verfahren nach Anspruch 1, **dadurch gekennzeichnet, dass** das elektrische Gerät mit der Datenbank über ein Rechnernetzwerk kommuniziert.

**3.** Verfahren nach Anspruch 1 oder 2, **dadurch gekennzeichnet, dass** das Rechnernetzwerk ein lokales Rechnernetz ist.

**4.** Verfahren nach Anspruch 1 oder 2, **dadurch gekennzeichnet, dass** das Rechnernetzwerk das Internet oder ein Teil des Internet ist.

**5.** Verfahren nach einem der vorstehenden Ansprüche, **dadurch gekennzeichnet, dass** die gerätespezifischen Informationen in der Datenbank als HTML-Dokumente abgespeichert sind.

**6.** Verfahren nach einem der vorstehenden Ansprüche, **dadurch gekennzeichnet, dass** die gerätespezifischen Informationen gerätespezifische Kundendienstinformationen sind.

**7.** Verfahren nach einem der vorstehenden Ansprüche, **dadurch gekennzeichnet, dass** die Zugriffsadresse ein URL-kompatibles Adressformat aufweist.

**8.** Verfahren nach einem der vorstehenden Ansprüche, **dadurch gekennzeichnet, dass** das Gerät über eine serielle Schnittstelle mit der Datenbank koppelbar ist.

**9.** Verfahren nach einem der vorstehenden Ansprüche, bei dem das elektrische Gerät Teil eines lokalen Netzwerks ist, das mit einem größeren Netzwerk und/ oder mit dem Internet gekoppelt ist.

**10.** Verfahren nach einem der vorstehenden Ansprüche, bei dem das elektrische Gerät ein elektrisches Haushaltsgerät ist.

**11.** Elektrisches Gerät, insbesondere elektrisches Haushaltsgerät, das mittels eines Verfahrens nach einem der Ansprüche 1 bis 10 mit einer Datenbank koppelbar ist, in der gerätespezifische Informationen abgespeichert sind.

**12.** Rechnernetzwerk, das mit wenigstens einem elektrischen Gerät gemäß Anspruch 11 gekoppelt ist.